# EUROPEAN PATENT APPLICATION

(11) **EP 4 746 482 A1**
(43) Date of publication of application: **20.05.2026**
(21) Application number: 24850842.6
(22) Date of filing: 29.07.2024
(51) Int. Cl.: H04W 12/106

(54) **COMMUNICATION METHOD AND COMMUNICATION APPARATUS**

(30) Priority: 04.08.2023 CN 202310984243
(71) Applicant: Huawei Technologies Co., Ltd., Shenzhen, Guangdong 518129 (CN)
(72) Inventor: LIU, Wenfeng, Shenzhen, Guangdong 518129 (CN); LI, He, Shenzhen, Guangdong 518129 (CN); WU, Rong, Shenzhen, Guangdong 518129 (CN); GUO, Tao, Shenzhen, Guangdong 518129 (CN)
(74) Representative: Epping - Hermann - Fischer
(86) International application number: PCT/CN2024/108167
(87) International publication number: WO 2025/031194

(57) **Abstract**

A communication method and a communication apparatus are provided. In a procedure for user equipment parameters update, a data management network element may store a header of a UPU container as a new type of data set in a UPU list, or may add a field to the UPU list to store the header of the UPU container, and provide, for an authentication network element, the UPU list including the header of the UPU container, so that the authentication network element can obtain, based on the UPU list including the header of the UPU container, a message authentication code used to perform integrity protection on the UPU list. The message authentication code obtained in this way may also be used to perform integrity protection on the header of the UPU container. This helps improve information transmission security, and integrity protection may be performed on the header while a modification to a message format is minimized.

## Description

This application claims priority to Chinese Patent Application No. 202310984243.2, filed with the China National Intellectual Property Administration on August 4, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

A user equipment parameters update (user equipment parameters update, UPU) mechanism is a mechanism in which a data management network element updates a user equipment (user equipment, UE) parameter using a control plane procedure. After UE successfully registers with a network, a to-be-updated parameter may be securely delivered to the UE via the data management network element. Currently, in a UPU procedure, the data management network element may send a message to the UE over a control plane. However, there is a risk that information sent by the data management network element to the UE is tampered with in a transmission process.

### SUMMARY

This application provides a communication method and a communication apparatus, to help improve information transmission security in a UPU procedure.

According to a first aspect, a communication method is provided. The method may be performed by a data management network element or a module or unit (for example, a chip or a circuit) in the data management network element. This is not limited in this application.

The method includes: when a parameter of a terminal device needs to be updated, sending a first request message to an authentication network element, where the first request message includes an identifier of the terminal device and a first user equipment parameters update UPU list; the first request message is used to request to perform security protection on the first UPU list; the first UPU list includes a first data set and a second data set; the first data set includes a first type field, a first length field, and a first data field; the first type field indicates that a type of the first data set is a data set that carries a first header of a UPU container; the UPU container is used to carry the first UPU list; the first header is used to carry information provided by a network for the terminal device; the first length field indicates a length of the first data set; the first data field is used to carry the first header; the second data set includes a second type field, a second length field, and a second data field; the second type field indicates a type of the to-be-updated parameter; the second length field indicates a length of the second data set; and the second data field is used to carry the to-be-updated parameter; receiving a first response message from the authentication network element, where the first response message includes a first message authentication code and a counter corresponding to the first message authentication code, and the first message authentication code is used to perform integrity protection on the first UPU list; and sending the first UPU list, the first message authentication code, and the counter to the terminal device via a mobility management network element.

In the foregoing method, the data management network element may place the first header of the UPU container in the first UPU list, and provide, for the authentication network element, the first UPU list including the first header, so that the authentication network element can obtain, based on the first UPU list, the message authentication code used to perform integrity protection on the first UPU list. Because the first UPU list includes the first header, the obtained message authentication code may also be used to perform integrity protection on the first header. In comparison with an existing UPU procedure in which integrity protection is performed only on a UPU list and a counter, in the foregoing method, integrity protection may be further performed on the first header, so that the information provided by the network for the terminal device is not easily tampered with. This helps improve information transmission security. In addition, the data management network element may store the first header of the UPU container as a new type of data set in the first UPU list. In this way, integrity protection can be performed on the first header while a modification to a message format is minimized.

With reference to the first aspect, in some implementations, the first header includes at least one of a first flag bit, a second flag bit, and a third flag bit, the first flag bit indicates that the UPU container carries the UPU list, the second flag bit indicates whether to request the terminal device to reply with acknowledgment information, and the third flag bit indicates whether to request the terminal device to perform re-registration.

Based on the foregoing method, integrity protection on the first header may be implemented, so that the terminal device correctly performs a subsequent operation based on the first header, for example, whether to read the UPU list, whether to send the acknowledgment information, and whether to perform re-registration.

With reference to any one of the first aspect or the implementations of the first aspect, in some other implementations, the method further includes: receiving first information from the terminal device, where the first information indicates that the terminal device fails to read the first header from the UPU container.

In the foregoing method, if the terminal device fails to read the first header from the first UPU list, for example, the terminal device does not support the UPU list in this format, the terminal device may send the first information to the data management network element, where the first information indicates that the terminal device fails to read the first header from the UPU container, so that the data management network element learns that the terminal device does not support the UPU container in this format, and the data management network element may no longer send the UPU container in this format to the terminal device subsequently.

With reference to any one of the first aspect or the implementations of the first aspect, in some other implementations, sending the first UPU list, the first message authentication code, and the counter to the terminal device via the mobility management network element includes: sending a notification message to the mobility management network element, where the notification message includes the first UPU list, the first message authentication code, and the counter; the notification message further includes second information; the second information is used to determine a second header of the UPU container; the first UPU list, the first message authentication code, the counter, and the second information are carried as independent information elements in the notification message; and the second header is used to carry the information provided by the network for the terminal device.

In the foregoing method, the data management network element may send the first UPU list, the first message authentication code, the counter, and the second information as the independent information elements in the notification message to the mobility management network element, so that the mobility management network element constructs the UPU container. The data management network element provides the second information for the mobility management network element, so that the mobility management network element can construct the second header of the UPU container based on the second information, to construct the UPU container.

With reference to any one of the first aspect or the implementations of the first aspect, in some other implementations, the second information is the second header.

With reference to any one of the first aspect or the implementations of the first aspect, in some implementations, the notification message includes the UPU container, the UPU container includes the first UPU list, the first message authentication code, the counter, and the second header of the UPU container, the second header is used to carry the information provided by the network for the terminal device, and the second header is outside the first UPU list.

According to a second aspect, a communication method is provided. The method may be performed by a terminal device or a module or unit (for example, a chip or a circuit) in the terminal device. This is not limited in this application.

For terms or features that are in the second aspect or the implementations of the second aspect and that are the same as those in the first aspect or the implementations of the first aspect, refer to the first aspect or the implementations of the first aspect. For technical effects of the second aspect or the implementations of the second aspect, refer to the technical effects in the first aspect or the implementations of the first aspect.

The method includes: receiving a user equipment parameters update UPU container, where the UPU container includes a first UPU list, a first message authentication code, and a counter corresponding to the first message authentication code; the first UPU list includes a first data set and a second data set; the first data set includes a first type field, a first length field, and a first data field; the first type field indicates that a type of the first data set is a data set that carries a first header of the UPU container; the first header is used to carry information provided by a network for the terminal device; the first length field indicates a length of the first data set; the first data field is used to carry the first header; the second data set includes a second type field, a second length field, and a second data field; the second type field indicates a type of a to-be-updated parameter of the terminal device; the second length field indicates a length of the second data set; and the second data field is used to carry the to-be-updated parameter; determining a second message authentication code based on the first UPU list and the counter; and when the first message authentication code matches the second message authentication code, obtaining the first header and the to-be-updated parameter, and performing a subsequent operation based on the first header.

In the foregoing method, the first message authentication code is used to perform integrity protection on the first UPU list in the received UPU container. In addition to the to-be-updated parameter of the terminal device, the first UPU list in the UPU container further includes the first header of the UPU container. Therefore, the first message authentication code can also be used to perform integrity protection on the first header. When the first message authentication code matches the second message authentication code, that is, when integrity authentication succeeds, the terminal device may correctly perform a subsequent operation based on the first header on which integrity authentication succeeds, for example, whether to send acknowledgment information and whether to perform re-registration. In addition, a data management network element may store the first header of the UPU container as a new type of data set in the first UPU list. In this way, integrity protection can be performed on the first header while a modification to a message format is minimized.

With reference to the second aspect, in some implementations, the first header includes at least one of a first flag bit, a second flag bit, and a third flag bit, the first flag bit indicates that the UPU container carries the UPU list, the second flag bit indicates whether to request the terminal device to reply with the acknowledgment information, and the third flag bit indicates whether to request the terminal device to perform re-registration.

With reference to any one of the second aspect or the implementations of the second aspect, in some other implementations, performing the subsequent operation based on the first header includes: determining the acknowledgment information based on the counter when the second flag bit indicates to request the terminal device to reply with the acknowledgment information, where the acknowledgment information includes a third message authentication code, and the third message authentication code is used by the data management network element to verify whether the terminal device correctly receives the first UPU list; and sending the acknowledgment information to the data management network element; and/or performing re-registration when the third flag bit indicates to request the terminal device to perform re-registration.

With reference to any one of the second aspect or the implementations of the second aspect, in some other implementations, the method further includes: discarding the UPU container when the first message authentication code does not match the second message authentication code.

With reference to any one of the second aspect or the implementations of the second aspect, in some other implementations, obtaining the first header includes: obtaining the first header in the first data field based on the first type field; and obtaining the to-be-updated parameter includes: obtaining the to-be-updated parameter in the second data field based on the second type field.

According to a third aspect, a communication method is provided. The method may be performed by a mobility management network element or a module or unit (for example, a chip or a circuit) in the mobility management network element. This is not limited in this application.

For terms or features that are in the third aspect or the implementations of the third aspect and that are the same as those in the first aspect or the implementations of the first aspect, refer to the first aspect or the implementations of the first aspect. For technical effects of the third aspect or the implementations of the third aspect, refer to the technical effects in the first aspect or the implementations of the first aspect.

The method includes: receiving a notification message from a data management network element, where the notification message includes a first UPU list, a first message authentication code, a counter corresponding to the first message authentication code, and second information; the first UPU list, the first message authentication code, the counter, and the second information are carried as independent information elements in the notification message; the first UPU list includes a first data set and a second data set; the first data set includes a first type field, a first length field, and a first data field; the first type field indicates that a type of the first data set is a data set that carries a first header of a UPU container; the UPU container is used to carry the first UPU list; the first header is used to carry information provided by a network for a terminal device; the first length field indicates a length of the first data set; the first data field is used to carry the first header; the second data set includes a second type field, a second length field, and a second data field; the second type field indicates a type of a to-be-updated parameter of the terminal device; the second length field indicates a length of the second data set; the second data field is used to carry the to-be-updated parameter; and the second information is used to determine a second header of the UPU container; generating the UPU container based on the first UPU list, the first message authentication code, the counter, and the second information, where the UPU container includes the second header, the first UPU list, the first message authentication code, and the counter, the second header is outside the first UPU list, and the second header is used to carry the information provided by the network for the terminal device; and sending the UPU container to the terminal device.

In the foregoing method, the data management network element may send the first UPU list, the first message authentication code, the counter, and the second information as the independent information elements in the notification message to the mobility management network element, so that the mobility management network element constructs the UPU container. The data management network element provides the second information for the mobility management network element, so that the mobility management network element can construct the second header of the UPU container based on the second information, to construct the UPU container.

With reference to the third aspect, in some implementations, the second information is the second header.

With reference to any one of the third aspect or the implementations of the third aspect, in some other implementations, the first header and/or the second header each include/includes at least one of a first flag bit, a second flag bit, and a third flag bit, the first flag bit indicates that the UPU container carries the UPU list, the second flag bit indicates whether to request the terminal device to reply with acknowledgment information, and the third flag bit indicates whether to request the terminal device to perform re-registration.

According to a fourth aspect, a communication method is provided. The method may be performed by a data management network element or a module or unit (for example, a chip or a circuit) in the data management network element. This is not limited in this application.

The method includes: when a parameter of a terminal device needs to be updated, sending a first request message to an authentication network element, where the first request message includes an identifier of the terminal device and a first user equipment parameters update UPU list; the first request message is used to request to perform security protection on the first UPU list; the first UPU list includes a data set and a first header of a UPU container; the UPU container is used to carry the first UPU list; the first header is used to carry information provided by a network for the terminal device; the data set includes a type field, a length field, and a data field; the type field indicates a type of the to-be-updated parameter; the length field indicates a length of the data set; and the data field is used to carry the to-be-updated parameter; receiving a first response message from the authentication network element, where the first response message includes a first message authentication code and a counter corresponding to the first message authentication code, and the first message authentication code is used to perform integrity protection on the first UPU list; and sending the first UPU list, the first message authentication code, and the counter to the terminal device via a mobility management network element.

In the foregoing method, the data management network element may place the first header of the UPU container in the first UPU list, and provide, for the authentication network element, the first UPU list including the first header, so that the authentication network element can obtain, based on the first UPU list, the message authentication code used to perform integrity protection on the first UPU list. Because the first UPU list includes the first header, the obtained message authentication code may also be used to perform integrity protection on the first header. In comparison with an existing UPU procedure in which integrity protection is performed only on a UPU list and a counter, in the foregoing method, integrity protection may be further performed on the first header, so that the information provided by the network for the terminal device is not easily tampered with. This helps improve information transmission security. In addition, the data management network element may add a field to the first UPU list to store the first header of the UPU container. In this way, integrity protection can be performed on the first header while a modification to a message format is minimized.

With reference to the fourth aspect, in some implementations, the first header includes at least one of a first flag bit, a second flag bit, and a third flag bit, the first flag bit indicates that the UPU container carries the UPU list, the second flag bit indicates whether to request the terminal device to reply with acknowledgment information, and the third flag bit indicates whether to request the terminal device to perform re-registration.

Based on the foregoing method, integrity protection on the first header may be implemented, so that the terminal device correctly performs a subsequent operation based on the first header, for example, whether to read the UPU list, whether to send the acknowledgment information, and whether to perform re-registration.

With reference to any one of the fourth aspect or the implementations of the fourth aspect, in some other implementations, the first header is located at a preset location in the first UPU list.

In the foregoing method, the data management network element places the first header of the UPU container at the preset location. In this way, no additional information is needed between the data management network element and the terminal device to determine a location of the first header in the first UPU list. This solution is simple and easy to implement, and integrity protection may be performed on the first header while the modification to the message format is minimized.

With reference to any one of the fourth aspect or the implementations of the fourth aspect, in some other implementations, the preset location is after the data set, and the data set is a last data set in the first UPU list.

In the foregoing method, by placing the first header of the UPU container after the last data set in the first UPU list, the data management network element may perform integrity protection on the first header while the modification to the message format is minimized.

With reference to any one of the fourth aspect or the implementations of the fourth aspect, in some implementations, the preset location is before the data set, and the data set is an 1^{st} data set in the first UPU list.

In the foregoing method, by placing the first header of the UPU container before the 1^{st} data set in the first UPU list, the data management network element may perform integrity protection on the first header while the modification to the message format is minimized.

With reference to any one of the fourth aspect or the implementations of the fourth aspect, in some other implementations, the first header is after the data set, the data set further includes a fourth flag bit, and the fourth flag bit indicates that the first header is after the data set.

In the foregoing method, the data management network element may place the first header of the UPU container after any data set in the first UPU list, and identify the data set by using a flag bit, so that a receiver (for example, the UE) of the first UPU list can locate the data set and obtain the first header after the data set. This solution is flexible and easy to implement, and integrity protection may be performed on the first header while the modification to the message format is minimized.

With reference to any one of the fourth aspect or the implementations of the fourth aspect, in some other implementations, the type field and the fourth flag bit are in a same byte, the type field occupies a 1^{st} bit to a 4^{th} bit in the byte, and the fourth flag bit occupies one of a 5^{th} bit to an 8^{th} bit in the byte.

With reference to any one of the fourth aspect or the implementations of the fourth aspect, in some other implementations, the method further includes: receiving first information from the terminal device, where the first information indicates that the terminal device fails to read the first header from the UPU container.

In the foregoing method, if the terminal device fails to read the first header from the first UPU list, for example, the terminal device does not support the UPU list in this format, the terminal device may send the first information to the data management network element, where the first information indicates that the terminal device fails to read the first header from the UPU container, so that the data management network element learns that the terminal device does not support the UPU container in this format, and the data management network element may no longer send the UPU container in this format to the terminal device subsequently.

With reference to any one of the fourth aspect or the implementations of the fourth aspect, in some other implementations, sending the first UPU list, the first message authentication code, and the counter to the terminal device via the mobility management network element includes: sending a notification message to the mobility management network element, where the notification message includes the first UPU list, the first message authentication code, and the counter.

With reference to any one of the fourth aspect or the implementations of the fourth aspect, in some other implementations, the notification message further includes second information; the second information is used to determine a second header of the UPU container; the first UPU list, the first message authentication code, the counter, and the second information are carried as independent information elements in the notification message; and the second header includes the first flag bit, the second flag bit, and the third flag bit.

In the foregoing method, the data management network element may send the first UPU list, the first message authentication code, the counter, and the second information as the independent information elements in the notification message to the mobility management network element, so that the mobility management network element constructs the UPU container. The data management network element provides the second information for the mobility management network element, so that the mobility management network element can construct the second header of the UPU container based on the second information, to construct the UPU container.

With reference to any one of the fourth aspect or the implementations of the fourth aspect, in some other implementations, the second information is the second header.

With reference to any one of the fourth aspect or the implementations of the fourth aspect, in some other implementations, the notification message includes the UPU container, the UPU container includes the first UPU list, the first message authentication code, the counter, and the second header of the UPU container, the second header includes the first flag bit, the second flag bit, and the third flag bit, and the second header is outside the first UPU list.

According to a fifth aspect, a communication method is provided. The method may be performed by a terminal device or a module or unit (for example, a chip or a circuit) in the terminal device. This is not limited in this application.

For terms or features that are in the fifth aspect or the implementations of the fifth aspect and that are the same as those in the fourth aspect or the implementations of the fourth aspect, refer to the fourth aspect or the implementations of the fourth aspect. For technical effects of the fifth aspect or the implementations of the fifth aspect, refer to the technical effects in the fourth aspect or the implementations of the fourth aspect.

The method includes: receiving a user equipment parameters update UPU container, where the UPU container includes a first UPU list, a first message authentication code, and a counter corresponding to the first message authentication code; the first UPU list includes a data set and a first header of the UPU container; the first header is used to carry information provided by a network for the terminal device; the data set includes a type field, a length field, and a data field; the type field indicates a type of a to-be-updated parameter of the terminal device; the length field indicates a length of the data set; and the data field is used to carry the to-be-updated parameter; determining a second message authentication code based on the first UPU list and the counter; and when the first message authentication code matches the second message authentication code, obtaining the first header and the to-be-updated parameter, and performing a subsequent operation based on the first header.

In the foregoing method, the first message authentication code is used to perform integrity protection on the first UPU list in the received UPU container. In addition to the to-be-updated parameter of the terminal device, the first UPU list in the UPU container further includes the first header of the UPU container. Therefore, the first message authentication code can also be used to perform integrity protection on the first header. When the first message authentication code matches the second message authentication code, that is, when integrity authentication succeeds, the terminal device may correctly perform the subsequent operation based on the first header on which integrity authentication succeeds, for example, whether to send acknowledgment information and whether to perform re-registration. In addition, a data management network element may add a field to the first UPU list to store the first header of the UPU container. In this way, integrity protection can be performed on the first header while a modification to a message format is minimized.

With reference to the fifth aspect, in some implementations, the first header includes at least one of a first flag bit, a second flag bit, and a third flag bit, the first flag bit indicates that the UPU container carries the UPU list, the second flag bit indicates whether to request the terminal device to reply with the acknowledgment information, and the third flag bit indicates whether to request the terminal device to perform re-registration.

With reference to any one of the fifth aspect or the implementations of the fifth aspect, in some other implementations, performing the subsequent operation based on the first header includes: determining the acknowledgment information based on the counter when the second flag bit indicates to request the terminal device to reply with the acknowledgment information, where the acknowledgment information includes a third message authentication code, and the third message authentication code is used by the data management network element to verify whether the terminal device correctly receives the first UPU list; and sending the acknowledgment information to the data management network element; and/or performing re-registration when the third flag bit indicates to request the terminal device to perform re-registration.

With reference to any one of the fifth aspect or the implementations of the fifth aspect, in some other implementations, the method further includes: discarding the UPU container when the first message authentication code does not match the second message authentication code.

With reference to any one of the fifth aspect or the implementations of the fifth aspect, in some other implementations, the first header is located at a preset location in the first UPU list.

With reference to any one of the fifth aspect or the implementations of the fifth aspect, in some other implementations, the preset location is after the data set, and the data set is a last data set in the first UPU list.

With reference to any one of the fifth aspect or the implementations of the fifth aspect, in some other implementations, the preset location is before the data set, and the data set is an 1^{st} data set in the first UPU list.

With reference to any one of the fifth aspect or the implementations of the fifth aspect, in some other implementations, obtaining the first header includes: obtaining the first header based on the preset location.

With reference to any one of the fifth aspect or the implementations of the fifth aspect, in some other implementations, the first header is after the data set, the data set further includes a fourth flag bit, and the fourth flag bit indicates that the first header is after the data set.

With reference to any one of the fifth aspect or the implementations of the fifth aspect, in some other implementations, the type field and the fourth flag bit are in a same byte, the type field occupies a 1^{st} bit to a 4^{th} bit in the byte, and the fourth flag bit occupies one of a 5^{th} bit to an 8^{th} bit in the byte.

With reference to any one of the fifth aspect or the implementations of the fifth aspect, in some other implementations, obtaining the first header includes: obtaining the first header after the data set based on the fourth flag bit.

According to a sixth aspect, a communication method is provided. The method may be performed by a mobility management network element or a module or unit (for example, a chip or a circuit) in the mobility management network element. This is not limited in this application.

For terms or features that are in the sixth aspect or the implementations of the sixth aspect and that are the same as those in the fourth aspect or the implementations of the fourth aspect, refer to the fourth aspect or the implementations of the fourth aspect. For technical effects of the sixth aspect or the implementations of the sixth aspect, refer to the technical effects in the fourth aspect or the implementations of the fourth aspect.

The method includes: receiving a notification message from a data management network element, where the notification message includes a first UPU list, a first message authentication code, a counter corresponding to the first message authentication code, and second information; the first UPU list, the first message authentication code, the counter, and the second information are carried as independent information elements in the notification message; the first UPU list includes a data set and a first header of a UPU container; the UPU container is used to carry the first UPU list; the first header is used to carry information provided by a network for a terminal device; the data set includes a type field, a length field, and a data field; the type field indicates a type of a to-be-updated parameter of the terminal device; the length field indicates a length of the data set; the data field is used to carry the to-be-updated parameter; the first message authentication code is used to perform integrity protection on the first UPU list; and the second information is used to determine a second header of the UPU container; generating the UPU container based on the first UPU list, the first message authentication code, the counter, and the second information, where the UPU container includes the second header, the first UPU list, the first message authentication code, and the counter, the second header is outside the first UPU list, and the second header is used to carry the information provided by the network for the terminal device; and sending the UPU container to the terminal device.

In the foregoing method, the data management network element may send the first UPU list, the first message authentication code, the counter, and the second information as the independent information elements in the notification message to the mobility management network element, so that the mobility management network element constructs the UPU container. The data management network element provides the second information for the mobility management network element, so that the mobility management network element can construct the second header of the UPU container based on the second information, to construct the UPU container.

With reference to the sixth aspect, in some implementations, the second information is the second header.

With reference to any one of the sixth aspect or the implementations of the sixth aspect, in some other implementations, the first header and/or the second header include/includes at least one of a first flag bit, a second flag bit, and a third flag bit, the first flag bit indicates that the UPU container carries the UPU list, the second flag bit indicates whether to request the terminal device to reply with acknowledgment information, and the third flag bit indicates whether to request the terminal device to perform re-registration.

With reference to any one of the sixth aspect or the implementations of the sixth aspect, in some other implementations, the first header is located at a preset location in the first UPU list.

With reference to any one of the sixth aspect or the implementations of the sixth aspect, in some other implementations, the preset location is after the data set, and the data set is a last data set in the first UPU list.

With reference to any one of the sixth aspect or the implementations of the sixth aspect, in some other implementations, the preset location is before the data set, and the data set is an 1^{st} data set in the first UPU list.

With reference to any one of the sixth aspect or the implementations of the sixth aspect, in some other implementations, the first header is after the data set, the data set further includes a fourth flag bit, and the fourth flag bit indicates that the first header is after the data set.

With reference to any one of the sixth aspect or the implementations of the sixth aspect, in some other implementations, the type field and the fourth flag bit are in a same byte, the type field occupies a 1^{st} bit to a 4^{th} bit in the byte, and the fourth flag bit occupies one of a 5^{th} bit to an 8^{th} bit in the byte.

According to a seventh aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a transceiver unit. In an implementation, the apparatus is a data management network element, a terminal device, or a mobility management network element. When the apparatus is the data management network element, the terminal device, or the mobility management network element, the transceiver unit may be a transceiver, an input/output interface, or a communication interface; and the processing unit may be at least one processor. Optionally, the transceiver is a transceiver circuit. Optionally, the input/output interface is an input/output circuit.

In another implementation, the apparatus is a chip, a chip system, or a circuit used in a data management network element, a terminal device, or a mobility management network element. When the apparatus is the chip, the chip system, or the circuit used in the data management network element, the terminal device, or the mobility management network element, the transceiver unit may be an input/output interface, an interface circuit, an output circuit, an input circuit, a pin, a related circuit, or the like in the chip, the chip system, or the circuit; and the processing unit may be at least one processor, a processing circuit, a logic circuit, or the like.

According to an eighth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a data management network element, a terminal device, or a mobility management network element.

In another implementation, the apparatus is a chip, a chip system, or a circuit used in a data management network element, a terminal device, or a mobility management network element.

According to a ninth aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to a tenth aspect, a processor is provided, configured to perform the method provided in the foregoing aspects.

Unless otherwise specified, or if operations such as sending and obtaining/receiving related to the processor do not conflict with actual functions or internal logic in related descriptions, the operations may be understood as operations such as output, receiving, and input of the processor, or may be understood as operations such as sending and receiving performed by a radio frequency circuit and an antenna. This is not limited in this application.

According to an eleventh aspect, a computer-readable storage medium is provided. The computer-readable storage medium stores program code to be executed by a device, and the program code casue the device to perform the method provided in any one of the foregoing aspects or the implementations of the foregoing aspects.

According to a twelfth aspect, a computer program product including instructions is provided. When the computer program product runs on a computer, the computer is enabled to perform the method provided in any one of the foregoing aspects or the implementations of the foregoing aspects.

According to a thirteenth aspect, a chip is provided. The chip includes a processor and a communication interface. The processor reads, through the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by the chip, a quantity of chips that specifically implement the method in this application is not limited in this application. For example, the method may be performed by one chip, or may be performed by two or more chips. In addition, when there are two or more chips that implement the method in this application, a chip vendor is not limited. The chips may be from a same vendor or from different vendors.

According to a fourteenth aspect, a communication system is provided, including at least one of the foregoing data management network element, terminal device, or mobility management network element.

According to a fifteenth aspect, a computer program is provided. When the computer program runs on a computer, the method provided in any one of the foregoing aspects or the implementations of the foregoing aspects is performed.

### BRIEF DESCRIPTION OF DRAWINGS

FIG. 1 is a diagram of a network architecture applicable to an embodiment of this application;
FIG. 2 is a schematic flowchart of a UPU procedure;
FIG. 3 is a diagram of a format of a UPU container;
FIG. 4 is a diagram of a data format of a UPU header;
FIG. 5 is a diagram of a data format of a UPU list;
FIG. 6 is a schematic flowchart of a communication method according to this application;
FIG. 7 is an example of a structure of a first UPU list;
FIG. 8 is another example of a structure of a first UPU list;
FIG. 9 is another example of a structure of a first UPU list;
FIG. 10 is another example of a structure of a first UPU list;
FIG. 11 is a diagram of a structure of an apparatus according to an embodiment of this application;
FIG. 12 is a diagram of another structure of an apparatus according to an embodiment of this application; and
FIG. 13 is a diagram of a chip system according to an embodiment of this application.

### DESCRIPTION OF EMBODIMENTS

For ease of understanding of embodiments of this application, before embodiments of this application are described, the following several points are described first.

"Indicating" or "indicate" may include direct indicating and indirect indicating, in other words, "indicating" or "indicate" may be explicitly and/or implicitly indicating. Various numerical numbers such as first and second are merely used for differentiation for ease of description, and are not used to limit the scope of embodiments of this application, for example, to distinguish between different messages and different information. "Predefinition" may be implemented by pre-storing corresponding code or a corresponding table in a device, or may be implemented in another manner of indicating related information. A specific implementation of "predefinition" is not limited in this application. A related "protocol" may be a standard protocol in the communication field, for example, may include a long term evolution (long term evolution, LTE) protocol, a new radio (new radio, NR) protocol, and a related protocol applied to a future communication system. This is not limited in this application. The terms such as "example", "for example", "for instance", and "in an (another) example" represent giving an example, an illustration, or a description. Any embodiment or design scheme described as an "example" in this application should not be explained as being more preferred or having more advantages than another embodiment or design scheme. The terms "comprise", "include", "have", and their variants all mean "include but are not limited to", unless otherwise specifically emphasized in another manner. "At least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof indicates any combination of these items, including a single item (piece) or any combination of a plurality of items (pieces). For example, at least one item (piece) of a, b, and c may indicate a, b, c, a and b, a and c, b and c, or a, b, and c. Each of a, b, and c may be in a singular form or a plural form. Related descriptions about sending a message, information, or data by a network element A to a network element B, and receiving the message, information, or data by the network element B from the network element A are intended to describe a network element to which the message, information, or data is to be sent. Whether the message, information, or data is directly sent or indirectly sent via another network element is not limited. Descriptions such as "when...", "in a case of...", and "if" all mean that a device performs corresponding processing in an objective case, and are not limited to time, and the device is not required to perform a determining action during implementation. This does not mean that there is another limitation.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The following describes communication systems to which embodiments of this application may be applied.

Embodiments of this application may be applied to various communication systems, for example, an LTE system, a frequency division duplex (frequency division duplex, FDD) system, a time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or an NR system, a 6th generation (6th generation, 6G) system, or a future communication system. The 5G mobile communication system in this application includes a non-standalone (non-standalone, NSA) 5G mobile communication system or a standalone (standalone, SA) 5G mobile communication system. The communication system may alternatively be a public land mobile network (public land mobile network, PLMN), a device-to-device (device-to-device, D2D) communication system, a machine-to-machine (machine-to-machine, M2M) communication system, an internet of things (internet of Things, IoT) communication system, a vehicle-to-everything (vehicle-to-everything, V2X) communication system, an uncrewed aerial vehicle (uncrewed aerial vehicle, UAV) communication system, or another communication system.

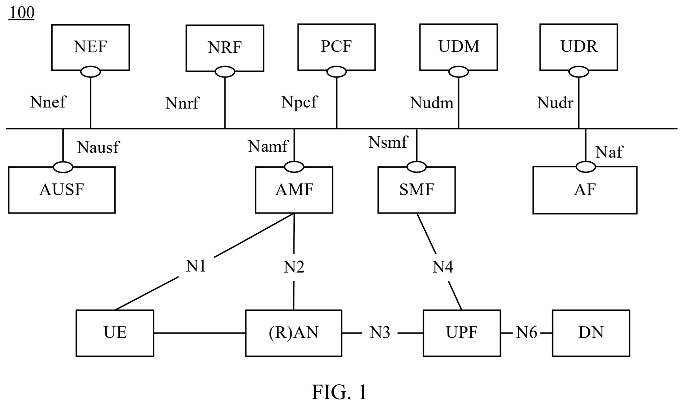

For example, FIG. 1 is a diagram of a network architecture applicable to an embodiment of this application. As shown in FIG. 1, the network architecture may specifically include three parts: a terminal device part, a data network (data network, DN) part, and an operator network part. The following briefly describes a function of a network element of each part.

The terminal device part may include a terminal device, and the terminal device may also be referred to as user equipment (user equipment, UE). The terminal device in this application is a device having a wireless transceiver function, and may communicate with one or more core network (core network, CN) devices via an access network device (which may also be referred to as an access device) in a radio access network (radio access network, RAN) 140. The terminal device may also be referred to as an access terminal, a terminal, a subscriber unit, a subscriber station, a mobile station, a remote station, a remote terminal, a mobile device, a user terminal, a user agent, a user apparatus, or the like. The terminal device may be deployed on land, including an indoor device, an outdoor device, a handheld device, or a vehicle-mounted device; may be deployed on a water surface (for example, on a ship); or may be deployed in air (for example, on an airplane, a balloon, or a satellite). The terminal device may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device may be a handheld device having a wireless communication function, a compute device or another device connected to a wireless modem, a vehicle-mounted device, a wearable device, an uncrewed aerial vehicle device, a terminal in an internet of things or internet of vehicles, a terminal in any form in a 5G network or a future network, relay user equipment, a terminal in a future evolved 6G network, or the like. The relay user equipment may be, for example, a 5G residential gateway (residential gateway, RG). For example, the terminal device may be a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home). The terminal device herein is a 3GPP terminal. A specific technology and a specific device form that are used by the terminal device are not limited in embodiments of this application.

The data network, which may also be referred to as a packet data network (packet data network, PDN), is usually a network located outside an operator network, for example, a third-party network. Certainly, in some implementations, the DN may alternatively be deployed by an operator, that is, the DN is a part of a PLMN. The operator network may access a plurality of data networks DNs, and a plurality of services may be deployed on the data network DN, to provide data and/or voice services for the terminal device. The terminal device may further access the data network DN over the operator network, to use an operator service deployed on the data network DN and/or a service provided by a third party.

The operator network part may include but is not limited to a (radio) access network ((radio) access network, (R)AN) and a core network (core network, CN) part.

The (R)AN, which may be considered as a sub-network of the operator network, is an implementation system between a service node in the operator network and the terminal device. To access the operator network, the terminal device first passes through the (R)AN, and then may be connected to the service node in the operator network over the (R)AN. An access network device (RAN device) in embodiments of this application is a device that provides a wireless communication function for the terminal device, and may also be referred to as a network device. The RAN device includes but is not limited to a next generation node base station (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a small cell device (pico), a mobile switching center, a network device in a future network, or the like. In systems using different radio access technologies, devices with functions of the access network device may have different names. A specific technology and a specific device form that are used by the access network device are not limited in embodiments of this application.

The CN part includes but is not limited to the following network functions (Network Functions, NFs): a user plane function (user plane function, UPF), a network exposure function (network exposure function, NEF), a network function repository function (network function repository function, NRF), a policy control function (policy control function, PCF), UDM, UDR, a network data analytics function (network data analytics function, NWDAF), an authentication server function (Authentication Server Function, AUSF), an access and mobility management function (access and mobility management function, AMF), a session management function (session management function, SMF), and an application function (application function, AF).

The following further briefly describes the NF functions included in the CN.
1. The UPF, which is a gateway for communication between the operator network and the data network DN, mainly provides user plane functionalities such as user packet forwarding and processing, connecting to the DN, session anchoring, and quality of service (quality of service, QoS) policy enforcement.
2. The NEF, which is a control plane function, is mainly configured to securely expose, to outside (for example, the AF), services and capabilities provided by 3GPP network functions. The NEF also allows authenticated and authorized application functions to securely provide information in a 3GPP network.
3. The NRF, which is a control plane function, may be configured to maintain real-time information about network functions and services in the network.
4. The PCF, which is a control plane function, supports a unified policy framework to govern network behavior, and provides policy rules, subscription information relevant for policy decisions, and the like for another control function.
5. The UDM, which is a control plane function, is mainly responsible for storing subscription data of subscribers in the operator network.
6. The UDR, which is a control plane function, is mainly responsible for data storage and retrieval, for example, providing functionalities such as storage and retrieval of subscription data by the UDM, storage and retrieval of policy data by the PCF, and storage and retrieval of NF group ID (group ID) information of users.
7. The AUSF, which is a control plane function, is usually used for primary authentication, that is, authentication between the terminal device (a subscriber) and the operator network.
8. The AMF, which is a control plane function, is mainly responsible for access control and mobility management for accessing the operator network by the terminal device, for example, including functionalities such as mobility status management, allocation of a temporary user identity, and user authentication and authorization.
9. The SMF, which is a control plane function, is mainly responsible for session-related functionalities such as session management (for example, session establishment, modify, and release), UPF network function selection and control, service and session continuity (service and session continuity, SSC) mode selection, and roaming.
10. The AF, which is a control plane function, is configured to provide application layer information. AFs are mainly classified into two types. A first type is an AF that is considered to be trusted by an operator based on operator deployment, and the AF of this type may directly interact with another network function in the network. A second type is an AF that is not allowed by the operator to directly access a network function, for example, a third-party AF, and the AF of this type may interact with another network function over an NEF network.

Nnef, Nnrf, Npcf, Nudm, Nudr, Nausf, Namf, Nsmf, N1, N2, N3, N4, N6, and N9 in FIG. 1 are interface sequence numbers. For example, for meanings of the interface sequence numbers, refer to meanings defined in the 3GPP standard protocol. The meanings of the interface sequence numbers are not limited in this application. It should be noted that a name of an interface between the network functions in FIG. 1 is merely an example. During specific implementation, the name of the interface in the system architecture may alternatively be another name. This is not limited in this application. In addition, names of messages (or signaling) transmitted between the foregoing network elements are merely examples, and do not constitute any limitation on functions of the messages. In the network architecture shown in FIG. 1, the network elements may communicate with each other through interfaces. The interfaces between the network elements may be point-to-point interfaces, or may be service-based interfaces. This is not limited in this application.

It should be understood that the network architecture shown above is merely an example for description, and the network architecture applicable to embodiments of this application is not limited thereto. Any network architecture that can implement functions of the network elements is applicable to embodiments of this application.

It should be further understood that functions or the network elements such as the AMF, the SMF, the UPF, the PCF, the UDM, the AUSF, the UDR, the NEF, the NRF, and the AF shown in FIG. 1 may be understood as network elements configured to implement different functions, for example, may be combined into a network slice as needed. These network elements may be independent devices, may be integrated into a same device to implement different functions, may be network elements in a hardware device, may be software functions running on dedicated hardware, or may be instantiated virtualization functions on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

For ease of understanding of embodiments of this application, some terms in embodiments of this application are first explained.

### 1. UE parameters update (UE parameters update, UPU)

A UPU mechanism is a mechanism in which a UDM updates a UE parameter using a control plane procedure. After UE successfully registers with a 5G system, a to-be-updated parameter may be securely delivered to the UE via the UDM. In a process in which the UDM securely delivers the to-be-updated parameter to the UE, the UDM needs to depend on a security parameter (for example, UPU-MAC-I_{AUSF} and UPU-XMAC-I_{UE} mentioned below) calculated by an AUSF. Therefore, before a UPU procedure is performed, the AUSF shall store a latest K_{AUSF} after completion of latest primary authentication.

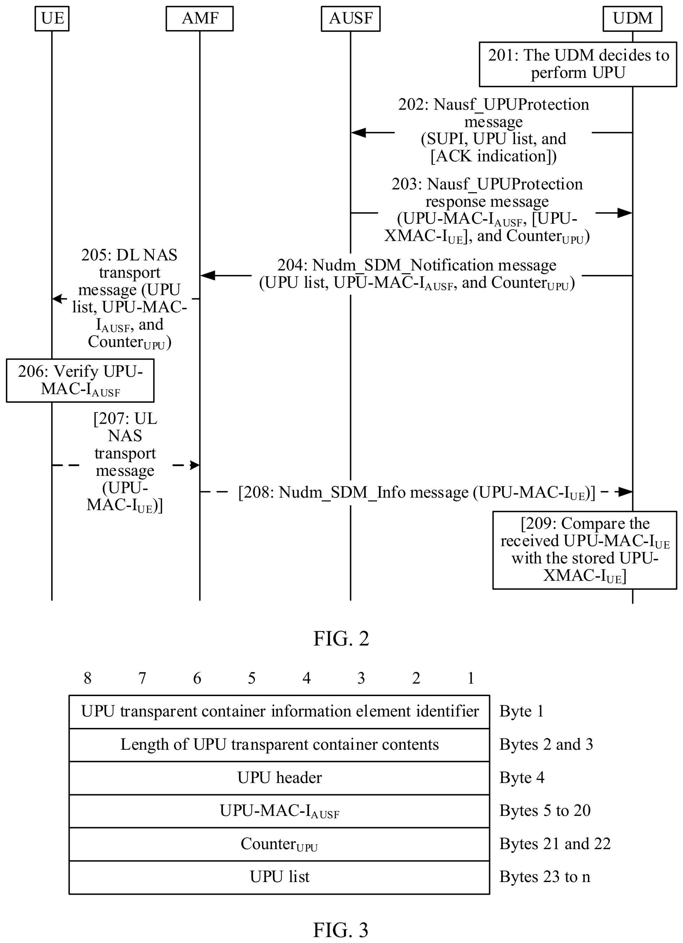

FIG. 2 is a schematic flowchart of a UPU procedure.

After UE is successfully authenticated and registered with a 5G system, a UDM may decide to perform the UPU procedure anytime. A security procedure for UPU may be shown in FIG. 2.

Step 201: The UDM decides to perform UPU.

For example, when the UE registers with the 5G system, the UDM decides to perform UPU using a control plane procedure. Then, the UDM prepares a UPU list, where the UPU list may include parameters protected by a secure packet mechanism and/or any UE parameter for which a final consumer is mobile equipment (mobile equipment, ME). If a final consumer of to-be-updated UE parameters (for example, updated routing ID data) is a universal subscriber identity module (universal subscriber identity module, USIM), the UDM shall protect these parameters using the secure packet mechanism, to update these parameters stored on the USIM.

Steps 202 to 203: The UDM invokes an Nausf_UPUProtection service operation, and sends the UPU list to an AUSF via an Nausf_UPUProtection service operation message, to get a (message authentication code)_{AUSF} (UPU-MAC-I_{AUSF}) and a counter_{UPU} (Counter_{UPU}).

For example, the Nausf_UPUProtection message in step 202 includes a SUPI of the UE and the UPU list, and an Nausf_UPUProtection response message in step 203 carries UPU-MAC-I_{AUSF} and Counter_{UPU}.

Optionally, if the UDM decides that the UE is to acknowledge successful security check of the received UPU list, the UDM may include an acknowledgment (acknowledgement, ACK) indication (ACK indication) in the Nausf_UPUProtection message to signal that the UDM needs an expected UPU-XMAC-I_{UE}. The AUSF may include UPU-XMAC-I_{UE} in the Nausf_UPUProtection response message.

The AUSF may calculate UPU-MAC-I_{AUSF} based on a key K_{AUSF}, where K_{AUSF} is K_{AUSF} stored after completion of latest primary authentication. When calculating UPU-MAC-I_{AUSF}, input parameters may include the UPU list provided by the UDM and Counter_{UPU}. In this way, UPU-MAC-I_{AUSF} allows the UE to verify integrity of the UPU list and Counter_{UPU} in a transmission process. The expected UPU-XMAC-I_{UE} allows the UDM to verify whether the UE has correctly received the UPU list.

Step 204: The UDM invokes an Nudm_SDM _Notification service operation to send the UPU list, UPU-MAC-I_{AUSF}, and Counter_{UPU} to an AMF.

If the AMF supports a UPU transparent container (UPU transparent container), an Nudm_SDM_Notification message includes the UPU transparent container. The UPU transparent container includes the UPU list, UPU-MAC-I_{AUSF}, and Counter_{UPU}.

If the AMF does not support a UPU transparent container, an Nudm_SDM _Notificationmessage includes independent information elements (information elements, IEs) including the UPU list, UPU-MAC-I_{AUSF}, and Counter_{UPU} within access and mobility subscription data.

Optionally, if the UDM decides that the UE is to acknowledge successful security check of the received UPU list, the UDM temporarily stores UPU-XMAC-I_{UE}.

Step 205: Upon receiving the Nudm_SDM_Notification message, the AMF sends a downlink (downlink, DL) non-access stratum (non-access stratum, NAS) transport (DL NAS transport) message to the UE.

If the UPU transparent container is received from the UDM in step 204, the AMF forwards the UPU transparent container to the UE, that is, the DL NAS transport message includes the received UPU transparent container.

If the UDM provides the independent information elements including the UPU list, UPU-MAC-I_{AUSF}, and Counter_{UPU} in step 204, the AMF constructs the UPU transparent container based on the UPU list, UPU-MAC-I_{AUSF}, and Counter_{UPU}, and includes the constructed UPU transparent container in the DL NAS transport message.

Step 206: On receiving the DL NAS transport message, the UE verifies UPU-MAC-I_{AUSF}.

For example, the UE calculates UPU-MAC-I_{AUSF} in the same way as the AUSF on the received UPU list and Counter_{UPU}, and verifies whether the calculated UPU-MAC-I_{AUSF} matches UPU-MAC-I_{AUSF} within the UPU transparent container in the DL NAS transport message.

If the two match, to be specific, the verification of UPU-MAC-I_{AUSF} is successful, and the UPU list includes the parameters protected by the secure packet mechanism, the ME forwards these security packets to the USIM.

If the two match, to be specific, the verification of UPU-MAC-I_{AUSF} is successful, and the UPU list includes a parameter that is not protected by the secure packet mechanism, the ME updates the parameters stored in the ME with received parameters in the UPU list.

Step 207: If the UDM has requested the UE to acknowledge the successful security check of the UPU list, and the UE has successfully verified and updated the UPU list provided by the UDM, the UE may send an uplink (uplink, UL) NAS transport (UL NAS Transport) message to the serving AMF, and include UPU-MAC-I_{UE} in the UL NAS transport message.

The UE calculates UPU-MAC-I_{UE} based on the received Counter_{UPU} in the same way as that used by the AUSF to calculate UPU-XMAC-I_{UE}. UPU-MAC-I_{UE} may be carried in a transparent container.

Step 208: If a transparent container with UPU-MAC-I_{UE} is received in the UL NAS transport message, the AMF sends an Nudm_SDM_Info message with the transparent container to the UDM. Step 209: If the UDM has requested the UE to acknowledge the successful security check of the UPU list, the UDM compares the received UPU-MAC-I_{UE} with UPU-XMAC-I_{UE} temporarily stored in step 204 to determine whether the UE correctly receives the UPU list.

For more detailed descriptions of the UPU procedure, refer to a related standard protocol.

### 2. UPU container

The UPU container may also be referred to as a UPU transparent container. When the UPU container is sent from a network to UE, a purpose of the UPU container is to provide the UE with a UPU list and an optional ACK request and/or re-registration request. When the UPU container is sent from UE to a network, a purpose of the UPU container is to indicate the UE to acknowledge successful reception of the UE parameters update transparent container.

The following describes a format of the UPU container sent from the network to the UE.

FIG. 3 is a diagram of a format of a UPU container.

When the UPU container is sent from a network to UE, the UPU container includes a UPU transparent container information element identifier (UE parameters update transparent container IEI), a length of UPU transparent container contents (length of UE parameters update transparent container contents), a UPU header (UE parameters update header), UPU-MAC-I_{AUSF}, a counter_{UPU} (Counter_{UPU}), and a UPU list (UE parameters update list), and bytes occupied by the parts are shown in the figure.
(1) The UPU transparent container information element identifier indicates an identifier of the UPU container, and is used to uniquely identify the UPU container.
(2) The length of the UPU transparent container contents indicates a length of the UPU container.
(3) The UPU header indicates a header of the UPU container.

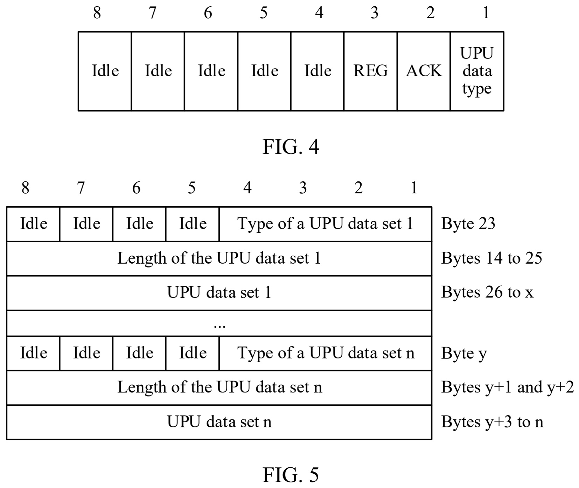

FIG. 4 is a diagram of a data format of a UPU header. As shown in FIG. 4, the UPU header may include a UPU data type (UPU data type) flag bit, an ACK flag bit, a re-registration (re-registration, REG) flag bit, and 5 idle bits. The UPU data type flag bit, the ACK flag bit, the REG flag bit, and the 5 idle bits respectively occupy a 1^{st} bit to an 8^{th} bit in a byte at which the UPU header is located. The UPU data type flag bit indicates that a UPU container carries a UPU list or carries acknowledgment information of successful reception of the UPU list. In other words, the UPU data type flag bit indicates whether the UPU container exists in a downlink UPU message or an uplink UPU message. The ACK flag bit indicates whether to request the UE to reply with acknowledgment information. The REG flag indicates whether to request the UE to perform re-registration.
(4) UPU-MAC-I_{AUSF} is a message authentication code of the UPU container, and is used to protect integrity of transmitted content.
(5) Counter_{UPU} is a counter, and is used as a freshness parameter to protect a message from a replay attack in a transmission process.
(6) The UPU list is used to carry a to-be-updated parameter, and may also be referred to as UPU data. The UPU list is uniformly used for description in this specification.

FIG. 5 is a diagram of a data format of a UPU list. As shown in FIG. 5, the UPU list includes several UPU data sets (data sets), and each UPU data set includes a UPU data set type (UE parameters update data set type) field, a length of UPU data set (length of UE parameters update data set) field, a UPU data set (UE parameters update data set) field, and 4 idle bits. The UPU data set type field indicates a type of the UPU data set (in other words, a type of a UE parameter carried in the UPU data set) and occupies 4 bits. Currently, a type number range in use is 0001 to 0100. The length of UPU data set field indicates a length of the UPU data set. The UPU data set field may also be referred to as a UPU data field, and is used to carry data (namely, a to-be-updated parameter). The 4 idle bits and the UPU data set type field occupy a same byte. Specifically, the UPU data type field occupies a 1 ^{st} bit to a 4^{th} bit in the byte, and a 5^{th} bit to an 8^{th} bit in the byte are the idle bits.

It can be learned from the foregoing content that, in the current UPU procedure, when UPU-MAC-I_{AUSF} is calculated, the input parameters include the UPU list and Counter_{UPU}, in other words, integrity protection is performed on the UPU list and Counter_{UPU}. That is, integrity protection is performed on content after a 21^{st} byte in the UPU container. However, the header of the UPU container (namely, a UPU header field) is not protected, and there is a risk that the UPU header is tampered with in a transmission process.

For the foregoing problem, this application provides a communication method and a communication apparatus, to implement integrity protection on the UPU header while a modification to a message format is minimized. Specifically, in this application, the header of the UPU container may be copied and a copied header may be placed in the UPU list. Because integrity protection has been performed on the UPU list in the current UPU procedure, the header of the UPU container may also be protected by copying the header of the UPU container and placing the copied header in the UPU list.

The following describes method embodiments of this application.

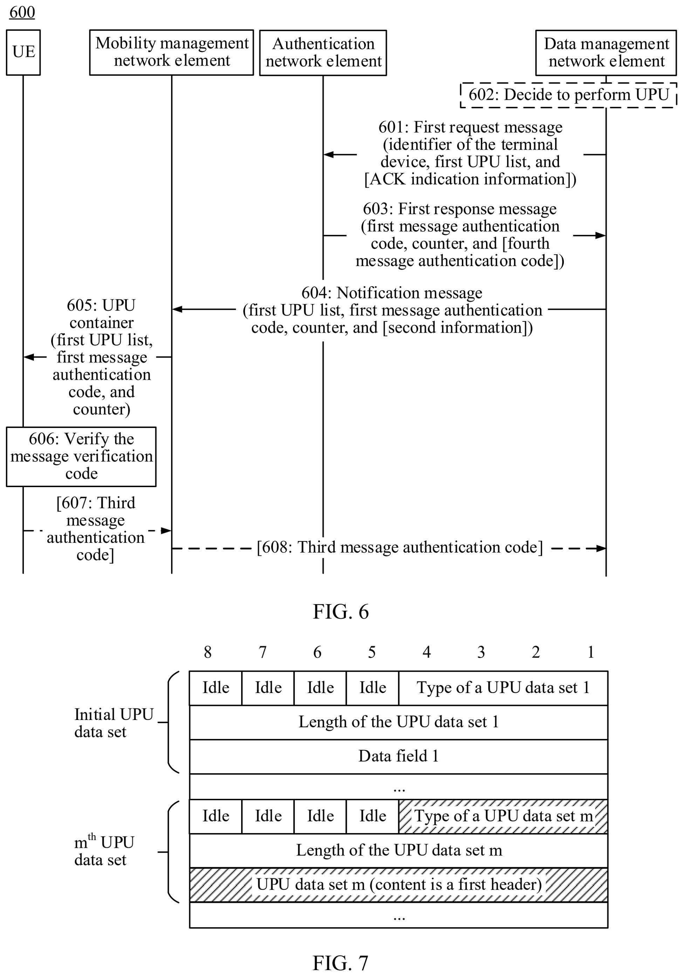

FIG. 6 is a schematic flowchart of a communication method according to this application. The method 600 may be performed by UE or a module or unit in the UE, a mobility management network element or a module or unit in the mobility management network element, an authentication network element or a module or unit in the authentication network element, and a data management network element or a module or unit in the data management network element.

For ease of description, the following uses the UE, the mobility management network element, the authentication network element, and the data management network element for description.

It should be noted that the mobility management network element, the authentication network element, and the data management network element may have different names in different communication systems. This is not limited in this application. For example, in the 5G system shown in FIG. 1, the mobility management network element may be an AMF, the authentication network element may be an AUSF, and the data management network element may be a UDM.

The method 600 includes at least a part of the following content.

Step 601: When a parameter of the UE needs to be updated, the data management network element sends a first request message to the authentication network element, in other words, the authentication network element receives the first request message from the data management network element.

The first request message includes an identifier of the UE and a first UPU list, the first UPU list includes the to-be-updated parameter of the UE, and the first request message is used to request to perform security protection on the first UPU list. In addition to the to-be-updated parameter of the UE, the first UPU list in embodiments of this application further includes a first header of a UPU container. The UPU container is a container used to carry the first UPU list.

The first header is used to carry information provided by a network (namely, the data management network element) for the UE, and the UE may perform a corresponding operation based on information in the first header. For example, the first header may include at least one of a first flag bit, a second flag bit, and a third flag bit. The first flag bit indicates that the UPU container carries the UPU list or carries acknowledgment information of successful reception of the UPU list. For example, the first flag bit is a UPU data type flag bit. When the UPU data type flag bit is 0, it indicates that the UPU container carries the UPU list; or when the UPU data type flag bit is 0, it indicates that the UPU container carries the acknowledgment information of the successful reception of the UPU list. Step 601 corresponds to a case in which the first flag bit indicates that the UPU container carries the UPU list. The second flag bit indicates whether to request the UE to reply with the acknowledgment information, in other words, whether to request an ACK. For example, the second flag bit is an ACK flag bit. The third flag bit indicates whether to request the UE to perform re-registration, in other words, whether to request re-registration. For example, the third flag bit is a REG flag bit.

For example, the data management network element may invoke an Nausf_UPUProtection service operation request to perform security protection on the first UPU list, that is, the first request message may be an Nausf_UPUProtection message, the identifier of the UE may be a SUPI of the UE, a first message authentication code may be UPU-MAC-I_{AUSF}, and a counter may be Counter_{UPU}.

Optionally, before step 601, step 602 may be further included, that is, the data management network element determines to update the parameter of the UE. In other words, the data management network element decides to perform a UPU procedure for the UE. After the UE is successfully authenticated and registered with the network, the data management network element may decide to perform the UPU procedure anytime.

There are a plurality of structures of the first UPU list in embodiments of this application. This is not limited.

In a possible implementation, the first header is stored in the first UPU list as a new type of data set.

For example, a structure of the first UPU list in this implementation may be shown as the following first structure.

### (1) First structure

The first UPU list includes a first data set and a second data set.

The first data set includes a first type field, a first length field, and a first data field. The first type field indicates that a type of the first data set is a data set that carries the first header, in other words, the first type field indicates a first type. The first type indicates that the first data set is used to carry the first header. The first type is different from a type of a currently used data set, to distinguish the first type from the type of the currently used data set, so that the UE can find the data set that carries the first header. The first length field indicates a length of the first data set. The first data field is used to carry the first header.

The second data set includes a second type field, a second length field, and a second data field. The second type field indicates a type of the second data set, in other words, indicates a type of the to-be-updated parameter. The second length field indicates a length of the second data set. The second data field is used to carry the to-be-updated parameter. For example, the to-be-updated parameter may be any one of the following data: routing ID update data (routing indicator update data), default configured NSSAI update data (default configured NSSAI update data), disaster roaming information update data (disaster roaming information update data), or ME routing ID update data (ME routing indicator update data).

It should be noted that whether the first UPU list further includes another data set is not limited in embodiments of this application. The first UPU list may include only the first data set and the second data set, or may include a data set other than the first data set and the second data set.

FIG. 7 is an example of a structure of a first UPU list.

As shown in FIG. 7, the first UPU list includes several UPU data sets, and each UPU data set includes the following three fields: a UPU data set type field, a length of UPU data set field, and a UPU data set field. The UPU data set type field may correspond to the type field of the data set mentioned above, the length of UPU data set field may correspond to the length field of the data set mentioned above, and the UPU data set field may correspond to the data field of the data set mentioned above. The UPU data set type field indicates a type of the UPU data set, and occupies a 1^{st} bit to a 4^{th} bit in 1 byte, a 5^{th} bit to an 8^{th} bit in the byte are idle bits, and a value of the idle bit may be 0. The length of UPU data set field indicates a length of the UPU data set, and occupies 1 byte. The UPU data set field is used to carry data in the UPU data set, that is, the to-be-updated parameter, and may occupy several bytes.

In FIG. 7, an example in which the first header is carried in a UPU data set m is used. As shown in FIG. 7, a value of a UPU data set type field of the UPU data set m is an unused type number with a length of 4 bits. Assuming that currently used type numbers are 0001 to 0100, the value of the UPU data set type field of the m^{th} data set may be a type number other than 0001 to 0100. A UPU data set field of the UPU data set m stores the first header. A value of a length of UPU data set field of the UPU data set m is a length of the UPU data set m.

It should be noted that the UPU data set m may be any one of several data sets included in the first UPU list.

In another possible implementation, a field may be added to the first UPU list to store the first header.

Specifically, the first UPU list includes a data set and the first header. The data set includes a type field, a length field, and a data field. The type field of the data set indicates a type of the data set, the length field of the data set indicates a length of the data set, and the data field of the data set is used to carry data in the data set, that is, the to-be-updated parameter. The data set described herein may be a data set adjacent to the first header. For ease of description, the data set described herein is referred to as a third data set below.

Optionally, the first header may be at a preset location in the first UPU list. For example, a structure of the first UPU list in this implementation may be shown as the following second structure and third structure.

### (2) Second structure

The preset location is after the third data set, and the third data set may be the last data set in all data sets included in the first UPU list. In other words, the first header is after the last data set in the first UPU list. The last piece of data in the first UPU list may refer to a data set corresponding to a last number after all the data sets included in the first UPU list are sequentially numbered.

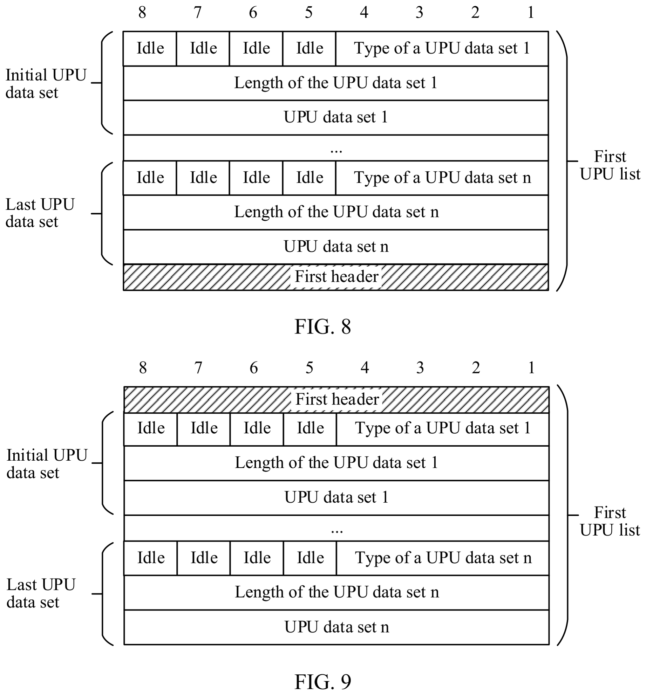

FIG. 8 is another example of a structure of a first UPU list.

As shown in FIG. 8, the first UPU list includes n UPU data sets and the first header, the n UPU data sets are numbered from 1 to n, and a UPU data set n is the third data set, that is, the last data set in the UPU data. Each UPU data set in the UPU data includes the following three fields: a UPU data set type field, a length of UPU data set field, and a UPU data set field. The UPU data set type field may correspond to the type field of the data set mentioned above, the length of UPU data set field may correspond to the length field of the data set mentioned above, and the UPU data set field may correspond to the data field of the data set mentioned above. The UPU data set type field indicates a type of the UPU data set, and occupies a 1^{st} bit to a 4^{th} bit in 1 byte, a 5^{th} bit to an 8^{th} bit in the byte are idle bits, and a value of the idle bit may be 0. The length of UPU data set field indicates a length of the UPU data set, and occupies 1 byte. The UPU data set field is used to carry data in the UPU data set, that is, the to-be-updated parameter, and may occupy several bytes. The first header may be located at a byte after the UPU data set n (namely, the last UPU data set).

### (3) Third structure

The preset location is before the third data set, and the third data set may be the 1^{st} data set in all data sets included in the first UPU list. In other words, the first header is before the 1^{st} data set in the first UPU list. The 1^{st} piece of data in the first UPU list may refer to a data set corresponding to an 1^{st} number after all the data sets included in the first UPU list are sequentially numbered.

For example, if the UPU container is the first UPU list starting from a 23^{rd} byte, the first header may be located at the 23^{rd} byte in the UPU container.

FIG. 9 is another example of a structure of a first UPU list.

As shown in FIG. 9, the first UPU list includes n UPU data sets and the first header, the n UPU data sets are numbered from 1 to n, and a UPU data set 1 is the third data set, that is, the 1^{st} data set in the UPU data. Each UPU data set in the UPU data includes the following three fields: a UPU data set type field, a length of UPU data set field, and a UPU data set field. The UPU data set type field may correspond to the type field of the data set mentioned above, the length of UPU data set field may correspond to the length field of the data set mentioned above, and the UPU data set field may correspond to the data field of the data set mentioned above. The UPU data set type field indicates a type of the UPU data set, and occupies a 1^{st} bit to a 4^{th} bit in 1 byte, a 5^{th} bit to an 8^{th} bit in the byte are idle bits, and a value of the idle bit may be 0. The length of UPU data set field indicates a length of the UPU data set, and occupies 1 byte. The UPU data set field is used to carry data in the UPU data set, that is, the to-be-updated parameter, and may occupy several bytes. The first header may be located at a byte before the UPU data set 1 (namely, the 1^{st} UPU data set).

Optionally, the first header may be after any data set in the first UPU list, in other words, the third data set may be any data set in the first UPU list. In this case, the third data set may be identified by using a flag bit, so that a receiver (for example, the UE) of the first UPU list can locate the third data set and obtain the first header after the third data set. For example, a structure of the first UPU list in this implementation may be shown as the following fourth structure.

### (4) Fourth structure

The first header is after the third data set. In addition to a type field, a length field, and a data field, the third data set herein further includes a fourth flag bit. The fourth flag bit indicates that the first header is after the third data set or indicates that the first header is not after the third data set. For example, when a value of the fourth flag bit is 1, it indicates that the first header is after the third data set; or when a value of the fourth flag bit is 0, it indicates that the first header is not after the third data set. Step 601 may correspond to a case in which the fourth flag bit indicates that the first header is after the third data set.

For example, the fourth flag bit may occupy an idle bit in the third data set.

It should be noted that if the third data set is the last data set in the first UPU list, the first header may be after the data set. If the third data set is a data set other than the last data set in the UPU data set, the first header is after the third data set and before a fourth data set, and the fourth data set is the 1^{st} data set that is sorted after the third data set.

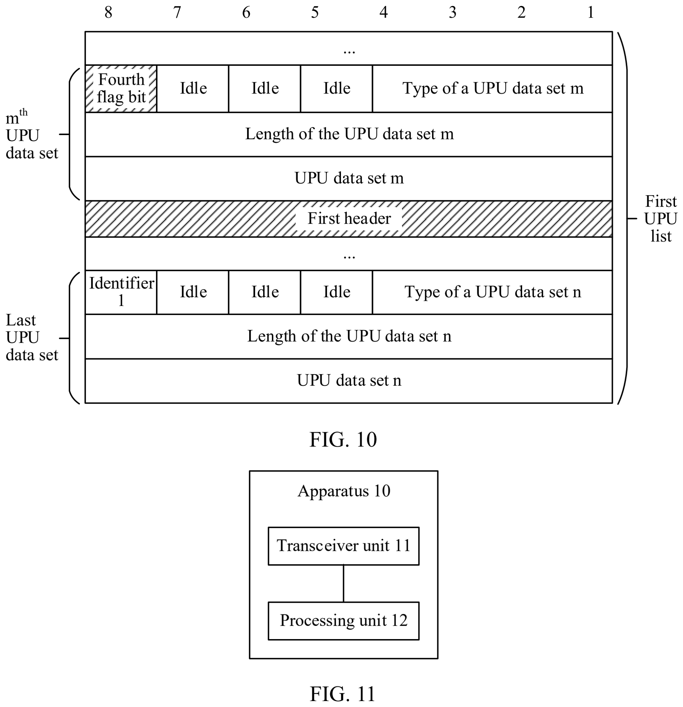

FIG. 10 is another example of a structure of a first UPU list.

As shown in FIG. 10, the first UPU list includes n UPU data sets and the first header, and the n UPU data sets are numbered from 1 to n.

Each UPU data set in the first UPU list includes the following three fields: a UPU data set type field, a length of UPU data set field, and a UPU data set field. The UPU data set type field may correspond to the type field of the data set mentioned above, the length of UPU data set field may correspond to the length field of the data set mentioned above, and the UPU data set field may correspond to the data field of the data set mentioned above. The UPU data set type field indicates a type of the UPU data set, and occupies a 1^{st} bit to a 4^{th} bit in 1 byte, a 5^{th} bit to an 8^{th} bit in the byte are idle bits, and a value of the idle bit may be 0. The length of UPU data set field indicates a length of the UPU data set, and occupies 1 byte. The UPU data set field is used to carry data in the UPU data set, that is, the to-be-updated parameter, and may occupy several bytes.

In FIG. 10, an example in which the third data set is a UPU data set m is used. One of 4 idle bits in the UPU data set m is used as the fourth flag bit (a 1^{st} idle bit in FIG. 10 is used as an example), and indicates that the first header is after the UPU data set m.

In embodiments of this application, that including the fourth flag bit in the third data set helps ensure compatibility of the UPU container in a transmission process may be understood as follows: A value of the fourth flag bit may be used to notify a receiver device (for example, the UE) of the UPU container whether the first header is after the third data set. If the fourth flag bit indicates that the first header is not after the third data set, the receiver device of the UPU container processes the UPU container using an existing procedure. If the fourth flag bit indicates that the first header is after the third data set, the receiver device of the UPU container processes the UPU container using the procedure mentioned in this application. In this way, transmission of an existing UPU container and the UPU container provided in embodiments of this application can be considered. In addition, the manner of identifying the third data set by using the fourth flag bit is also applicable to a case in which the third data set is a specified or fixed data set in the first UPU list. This is not limited. If the third data set is the specified data set or the fixed data set, the fourth flag bit is optional, in other words, the third data set may have the fourth flag bit, or may not have the fourth flag bit. For example, the third data set is fixed as the last data set. Because the third data set is fixed as the last data set, even if the last data set does not include the fourth flag bit, a transmitter of the first UPU list may fixedly place the first header after the last data set in the first UPU list, and the receiver of the first UPU list may fixedly read the first header placed after the last data set in the first UPU list.

A specific manner of constructing the first UPU list by the data management network element is not limited in embodiments of this application.

In a possible implementation, when the first UPU list uses the first structure, the data management network element may first construct a header (for ease of description, the header is referred to as a second header) of the UPU container used to carry the first UPU list. The data management network element constructs a plurality of data sets. Specifically, the data management network element constructs, in an existing manner, a data set (for example, a second data set) other than the first data set in the plurality of data sets. When constructing the first data set in the plurality of data sets, the data management network element sets the type of the first data set to the first type, to indicate that a copied version of the second header (for ease of description, the copied version is referred to as the first header) is stored in the data field of the first data set; stores the first header in the data field of the first data set; then calculates the length of the first data set; and stores the obtained length in the length field of the first data set. Then, the data management network element assembles the plurality of data sets into the first UPU list.

In another possible implementation, when the first UPU list uses the second structure, the data management network element may first construct a header (for ease of description, the header is referred to as a second header) of the UPU container used to carry the first UPU list. The data management network element constructs one or more data sets in an existing manner. After assembling all the data sets, the data management network element copies the second header (a copied version is the first header) and attaches the first header after the last data set, to obtain the first UPU list.

In still another possible implementation, when the first UPU list uses the third structure, the data management network element may first construct a header (for ease of description, the header is referred to as a second header) of the UPU container used to carry the first UPU list. The data management network element constructs one or more data sets in an existing manner. After assembling all the data sets, the data management network element copies the second header (a copied version is the first header) and attaches the first header before the 1^{st} data set, to obtain the first UPU list.

In yet another possible implementation, when the first UPU list uses the fourth structure, the data management network element may first construct a header (for ease of description, the header is referred to as a second header) of the UPU container used to carry the first UPU list. The data management network element constructs one or more data sets in an existing manner. The data management network element assembles all the data sets. The data management network element randomly selects a data set, copies the second header (a copied version is the first header), attaches the first header after the selected data set, selects 1 idle bit in the selected data set as the fourth flag bit, and sets the fourth flag bit to 1, to indicate that the first header is after the data set.

It should be noted that the manners of constructing the first UPU list are merely examples. The first UPU list in embodiments of this application may alternatively be constructed in another manner. This is not limited.

In addition, it should be further noted that, if the data management network element decides that the UE is to acknowledge successful security check of the first UPU list received by the data management network element, the data management network element may further include ACK indication information in the first request message, to signal that the data management network element needs a fourth message authentication code. The fourth message authentication code is used by the data management network element to verify whether the UE correctly receives the first UPU list. For example, when the data management network element obtains a security parameter from the authentication network element by invoking the Nausf_UPUProtection service operation, the fourth message authentication code may be UPU-XMAC-I_{UE}.

Step 603: The authentication network element sends a first response message to the data management network element, in other words, the data management network element receives the first response message from the authentication network element.

The first response message includes the first message authentication code and the counter corresponding to the first message authentication code, and the first message authentication code is used to perform integrity protection on the first UPU list. The counter is used to prevent a replay attack. The counter corresponding to the first message authentication code may be understood as a counter used when the first message authentication code is calculated.

For example, after the authentication network element receives the first request message, the authentication network element may obtain the corresponding counter based on the received identifier of the UE, calculate the first message authentication code based on the received first UPU list and the obtained counter, and then send the first message authentication code and the counter to the data management network element via the first response message. For a manner in which the authentication network element calculates the first message authentication code based on the received first UPU list and the counter corresponding to the UE, refer to Appendix A.19 in the standard protocol TS 33.501. Details are not described herein again.

It should be noted that, if the data management network element indicates to the authentication network element that the data management network element needs the fourth message authentication code, the authentication network element further calculates the fourth message authentication code, and includes the fourth message authentication code in the first response message. After receiving the first response message, the data management network element may store the fourth message authentication code, to subsequently verify whether the UE correctly receives the first UPU list. For a manner in which the authentication network element calculates the fourth message authentication code, refer to Appendix A.20 in the standard protocol TS 33.501. Details are not described herein again.

For example, when the data management network element invokes the Nausf_UPUProtection service operation, the first response message may be an Nausf_UPUProtection response message, the first message authentication code may be UPU-MAC-I_{AUSF}, the counter may be Counter_{UPU}, and the fourth message authentication code may be UPU-XMAC-I_{UE}.

Step 604: The data management network element sends a notification message to the mobility management network element, in other words, the mobility management network element receives the notification message from the data management network element.

The notification message includes the first UPU list, the first message authentication code, and the counter.

If the mobility management network element supports the UPU container, the data management network element constructs the UPU container based on the first UPU list, the first message authentication code, and the counter, and includes the UPU container in the notification message. For example, a structure of the UPU container may be shown in FIG. 3, and includes a UPU container information element identifier, a length of UPU container contents, a UPU header, the first message authentication code, the counter, and the first UPU list. The first UPU list includes the first header, and the UPU header may correspond to the second header described above.

If the mobility management network element does not support the UPU container, the first UPU list, the first message authentication code, and the counter may be sent to the mobility management network element as independent information elements in the notification message, for example, may be sent to the mobility management network element as independent information elements in access and mobility subscription data, so that the mobility management network element constructs the UPU container. Optionally, the notification message further includes second information used to determine the second header, so that the mobility management network element can correctly construct the UPU container. Optionally, the second information may be the second header, in other words, the data management network element may provide, for the mobility management network element, the constructed UPU header. Optionally, the second information may be information needed for constructing the second header, for example, whether to request the UE to reply with acknowledgment information or whether to request the UE to perform re-registration.

For example, the notification message may be an Nudm_SDM_Notification message.

Step 605: The mobility management network element sends the UPU container to the UE.

If the UPU container is received from the data management network element in step 604, the mobility management network element forwards the UPU container to the UE.

If the data management network element provides the independent information elements including the first UPU list, the first message authentication code, and the counter in step 604, the mobility management network element constructs the UPU container based on the first UPU list, the first message authentication code, and the counter. Optionally, if the data management network element further provides the second information, the mobility management network element constructs the UPU container based on the first UPU list, the first message authentication code, the counter, and the second header.

For example, the mobility management network element may send the UPU container to the UE via a DL NAS transport message.

Step 606: The UE verifies the message authentication code.

For example, the UE calculates a second message authentication code based on the received first UPU list and counter in a manner the same as that used by the authentication network element to calculate the first message authentication code, and performs integrity authentication on based on the first message authentication code and the second message authentication code.

If the first message authentication code does not match the second message authentication code, that is, integrity authentication fails, the UE discards the received UPU container. In a possible implementation, the UE may further send a UPU uplink packet to the data management network element via the mobility management network element, to notify the data management network element that integrity authentication on the first UPU list fails. For example, the UE may include a fifth message authentication code in the UPU uplink packet, and the fifth message authentication code may be obtained based on a counter used when previous integrity authentication succeeds.

If the first message authentication code matches the second message authentication code, that is, integrity authentication succeeds, the UE obtains the first header in the first UPU list, and performs a subsequent operation based on the first header. In an example, when the third flag bit in the first header indicates to request the UE to perform re-registration, the UE performs re-registration. In another example, when the second flag bit in the first header indicates to request the UE to reply with the acknowledgment information, the UE may determine the acknowledgment information based on the received counter. The acknowledgment information includes a third message authentication code, and the third message authentication code is used by the data management network element to verify whether the UE correctly receives the first UPU list. Then, the UE sends the acknowledgment information to the data management network element. Specific descriptions are shown in steps 607 and 608 below.

It should be noted that when the first message authentication code matches the second message authentication code, the UE may directly use the first header as the header of the UPU container, or the UE may compare the first header with the second header outside the first UPU list. When the first header is the same as the second header, the UE uses the first header or the second header as the header of the UPU container. When the first header is different from the second header, the UE uses the first header as the header of the UPU container.

In addition, if the UE fails to read the first header from the first UPU list, for example, the UE does not support the UPU list in this format, the UE may send the first information to the data management network element, where the first information indicates that the UE fails to read the first header from the UPU container, so that the data management network element learns that the UE does not support the UPU container in this format, and the data management network element may no longer send the UPU container in this format to the UE subsequently. For example, the UE may include the first information in a UPU uplink packet by using a Res field, and the first information may be a failure cause. The failure cause may be, for example, a format parsing failure. A specific manner in which the UE obtains the first header is not limited in embodiments of this application.

In a possible implementation, when the first UPU list uses the first structure, the UE obtains the first header from the first data field in the first data set based on the first type field.

In another possible implementation, when the first UPU list uses the second structure and the third structure, the UE obtains the first header from the third data set based on the preset location. For example, if the preset location is 8 bits after the last data set and adjacent to the last data set, the UE may find the last data set and read the 8 bits after the data set, or the UE may directly read the last 8 bits in the first UPU list, and use the read content as the first header. For another example, if the preset location is 8 bits before the 1^{st} data set and adjacent to the 1^{st} data set, the UE may find the 1^{st} data set and read the 8 bits before the data set, or the UE may directly read the first 8 bits in the first UPU list, and use the read content as the first header.

In still another possible implementation, when the first UPU list uses the fourth structure, the UE finds the third data set in the first UPU list based on the fourth flag bit, and reads the first header from the data field of the third data set. For example, the UE reads the UPU data from the UPU container, traverses all the data sets, locates, by using the fourth flag bit, the third data set to which the first header is attached, then points a pointer to an end location of the third data set to which the first header is attached, reads 8 bits starting from the location, and uses the read content as the first header.

Step 607: If the UDM has requested the UE to acknowledge the successful security check of the first UPU list (for example, the UE determines, based on the ACK flag bit in the header of the determined UPU container, that the UE needs to acknowledge the successful security check of the first UPU list), and the UE has successfully verified and updated the first UPU list provided by the UDM, the UE may send a UPU uplink packet to the mobility management network element, and include the third message authentication code in the UPU uplink packet.

The third message authentication code is used by the data management network element to verify whether the UE correctly receives the first UPU list. For example, the third message authentication code may be UPU-MAC-I_{UE}.

For example, the UE calculates the third message authentication code based on the received counter in a manner the same as that used by the authentication network element to calculate the fourth message authentication code. For a manner in which the UE calculates the third message authentication code, refer to Appendix A.20 in the standard protocol TS 33.501. Details are not described herein again.

For example, the UPU uplink packet may be carried in a UL NAS transport message, and the third message authentication code may be carried in a transparent container.

Step 608: If the transparent container carrying the third message authentication code is received, the mobility management network element may send, to the data management network element, a user information message carrying the transparent container.

For example, the user information message may be an Nudm_SDM_Info message.

After receiving the user information message, the data management network element may compare the received third message authentication code with the fourth message authentication code stored in step 603, to determine whether the UE correctly receives the first UPU list.

It should be noted that the first information and the third message authentication code may be carried in a same UPU uplink packet, that is, the first information is also sent in steps 607 and 608. The first information and the third message authentication code may alternatively be carried in different UPU uplink packets. This is not limited.

It should be further noted that a number of the first UPU list is merely for ease of description and differentiation, and the first UPU list may alternatively be replaced with a UPU list.

The foregoing describes the method embodiments provided in this application in detail with reference to FIG. 6 to FIG. 10. The following describes apparatus embodiments of this application with reference to FIG. 11 to FIG. 13.

It may be understood that, to implement functions in the foregoing embodiments, apparatuses in FIG. 11 to FIG. 13 include corresponding hardware structures and/or software modules for performing each function. A person skilled in the art should be easily aware that, in this application, the units and method steps in the examples described with reference to embodiments disclosed in this application can be implemented by hardware or a combination of hardware and computer software.

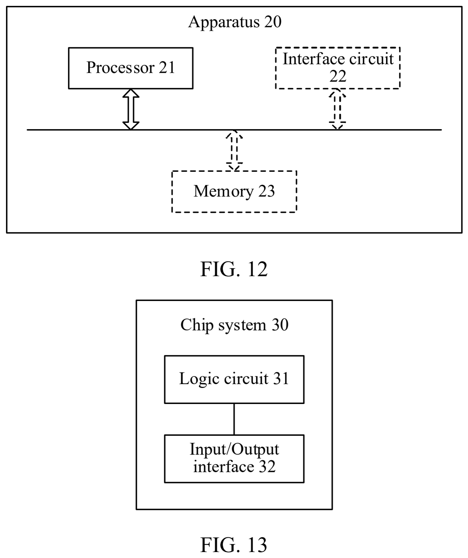

FIG. 11 and FIG. 12 are diagrams of structures of possible apparatuses according to embodiments of this application. These apparatuses may be configured to implement functions of the UE, the mobility management network element, the authentication network element, or the data management network element in the foregoing method embodiments. Therefore, these apparatuses can also implement beneficial effects of the foregoing method embodiments.

As shown in FIG. 11, an apparatus 10 includes a transceiver unit 11 and a processing unit 12.

When the apparatus 10 is configured to implement functions of the UE in FIG. 6, the transceiver unit 11 is configured to perform sending and receiving steps of the UE, for example, step 605 and step 607. The processing unit 12 is configured to perform a processing step of the UE, for example, step 606. When the apparatus 10 is configured to implement functions of the mobility management network element in FIG. 6, the transceiver unit 11 is configured to perform sending and receiving steps of the mobility management network element, for example, step 604, step 605, step 607, and step 608. The processing unit 12 is configured to perform a processing step of the mobility management network element. When the apparatus 10 is configured to implement functions of the authentication network element in FIG. 6, the transceiver unit 11 is configured to perform sending and receiving steps of the authentication network element, for example, step 601 and step 603. The processing unit 12 is configured to perform a processing step of the authentication network element. When the apparatus 10 is configured to implement functions of the data management network element in FIG. 6, the transceiver unit 11 is configured to perform sending and receiving steps of the data management network element, for example, step 601, step 603, step 604, and step 608. The processing unit 12 is configured to perform a processing step of the data management network element, for example, step 602.

For more detailed descriptions of the transceiver unit 11 and the processing unit 12, refer to related descriptions in the foregoing method embodiments. Details are not described herein.

As shown in FIG. 12, an apparatus 20 includes a processor 21. The processor 21 is coupled to a memory 23. The memory 23 is configured to store instructions. When the apparatus 20 is configured to implement the foregoing method, the processor 21 is configured to execute the instructions in the memory 23, to implement a function of the foregoing processing unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing method, the processor 21 is configured to execute the instructions to implement the function of the foregoing processing unit 12, and the interface circuit 22 is configured to implement a function of the foregoing transceiver unit 11.

For example, when the apparatus 20 is a chip used in the UE, the mobility management network element, the authentication network element, or the data management network element, the chip implements the functions of the UE, the mobility management network element, the authentication network element, or the data management network element in the foregoing method embodiments. The chip receives information from another module (for example, a radio frequency module or an antenna) in the UE, the mobility management network element, the authentication network element, or the data management network element, where the information is sent by another apparatus to the UE, the mobility management network element, the authentication network element, or the data management network element; or the chip sends information to another module (for example, a radio frequency module or an antenna) in the UE, the mobility management network element, the authentication network element, or the data management network element, where the information is sent by the UE, the mobility management network element, the authentication network element, or the data management network element to another apparatus. FIG. 13 is a diagram of a chip system 30 according to an embodiment of this application. The chip system 30 (which may also be referred to as a processing system) includes a logic circuit 31 and an input/output interface (input/output interface) 32.

The logic circuit 31 may be a processing circuit in the chip system 30. The logic circuit 31 may be coupled and connected to a storage unit, and invoke instructions in the storage unit, to enable the chip system 30 to implement the methods and functions in embodiments of this application. The input/output interface 32 may be an input/output circuit in the chip system 30, and outputs information processed by the chip system 30, or inputs to-be-processed data or signaling information to the chip system 30 for processing.

In a solution, the chip system 30 is configured to implement operations performed by the UE, the mobility management network element, the authentication network element, or the data management network element in the foregoing method embodiments.

For example, the logic circuit 31 is configured to implement processing-related operations performed by the UE, the mobility management network element, the authentication network element, or the data management network element in the foregoing method embodiments. The input/output interface 32 is configured to implement sending and/or receiving-related operations performed by the UE, the mobility management network element, the authentication network element, or the data management network element in the foregoing method embodiments.

This application further provides a communication apparatus, including a processor. The processor is coupled to a memory. The memory is configured to store a computer program or instructions and/or data. The processor is configured to execute the computer program or the instructions stored in the memory, or read the data stored in the memory, to perform the method in the foregoing method embodiments. Optionally, there are one or more processors. Optionally, the communication apparatus includes the memory. Optionally, there are one or more memories. Optionally, the memory and the processor are integrated together or disposed separately.

This application further provides a chip, including a processor. The processor is coupled to a memory. The memory is configured to store a computer program or instructions, and the processor is configured to execute the computer program or the instructions stored in the memory, to implement the method performed by the UE, the mobility management network element, the authentication network element, or the data management network element in the foregoing method embodiments.

This application further provides a computer-readable storage medium. The computer-readable storage medium stores computer instructions used to implement the method performed by the UE, the mobility management network element, the authentication network element, or the data management network element in the foregoing method embodiments.

This application further provides a computer program product, including instructions. When the instructions are executed by a computer, the method performed by the UE, the mobility management network element, the authentication network element, or the data management network element in the foregoing method embodiments is implemented.

This application further provides a communication system. The communication system includes at least one of the UE, the mobility management network element, the authentication network element, or the data management network element in the foregoing embodiments.

For explanations and beneficial effect of related content in any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any regular processor, or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a portable hard drive, a compact disc read-only memory (compact disc read-only memory, CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located at the UE, the mobility management network element, the authentication network element, or the data management network element. Certainly, the processor and the storage medium may alternatively exist in the UE, the mobility management network element, the authentication network element, or the data management network element as discrete components.

All or some of the foregoing embodiments may be implemented by using software, hardware, firmware, or any combination thereof. When the software is used for implementation, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
when a parameter of a terminal device needs to be updated, sending a first request message to an authentication network element, wherein the first request message comprises an identifier of the terminal device and a first user equipment parameters update UPU list; the first request message is used to request to perform security protection on the first UPU list; the first UPU list comprises a first data set and a second data set; the first data set comprises a first type field, a first length field, and a first data field; the first type field indicates that a type of the first data set is a data set that carries a first header of a UPU container; the UPU container is used to carry the first UPU list; the first header is used to carry information provided by a network for the terminal device; the first length field indicates a length of the first data set; the first data field is used to carry the first header; the second data set comprises a second type field, a second length field, and a second data field; the second type field indicates a type of the to-be-updated parameter; the second length field indicates a length of the second data set; and the second data field is used to carry the to-be-updated parameter;
receiving a first response message from the authentication network element, wherein the first response message comprises a first message authentication code and a counter corresponding to the first message authentication code, and the first message authentication code is used to perform integrity protection on the first UPU list; and
sending the first UPU list, the first message authentication code, and the counter to the terminal device via a mobility management network element.

2. The method according to claim 1, wherein
the first header comprises at least one of a first flag bit, a second flag bit, and a third flag bit, the first flag bit indicates that the UPU container carries the UPU list, the second flag bit indicates whether to request the terminal device to reply with acknowledgment information, and the third flag bit indicates whether to request the terminal device to perform re-registration.

3. The method according to claim 1 or 2, wherein the method further comprises:
receiving first information from the terminal device, wherein the first information indicates that the terminal device fails to read the first header from the UPU container.

4. The method according to any one of claims 1 to 3, wherein
the sending the first UPU list, the first message authentication code, and the counter to the terminal device via the mobility management network element comprises:
sending a notification message to the mobility management network element, wherein the notification message comprises the first UPU list, the first message authentication code, and the counter; the notification message further comprises second information; the second information is used to determine a second header of the UPU container; the first UPU list, the first message authentication code, the counter, and the second information are carried as independent information elements in the notification message; and the second header is used to carry the information provided by the network for the terminal device.

5. A communication method, wherein the method comprises:
receiving a user equipment parameters update UPU container, wherein the UPU container comprises a first UPU list, a first message authentication code, and a counter corresponding to the first message authentication code; the first UPU list comprises a first data set and a second data set; the first data set comprises a first type field, a first length field, and a first data field; the first type field indicates that a type of the first data set is a data set that carries a first header of the UPU container; the first header is used to carry information provided by a network for a terminal device; the first length field indicates a length of the first data set; the first data field is used to carry the first header; the second data set comprises a second type field, a second length field, and a second data field; the second type field indicates a type of a to-be-updated parameter of the terminal device; the second length field indicates a length of the second data set; and the second data field is used to carry the to-be-updated parameter;
determining a second message authentication code based on the first UPU list and the counter; and
when the first message authentication code matches the second message authentication code, obtaining the first header and the to-be-updated parameter, and performing a subsequent operation based on the first header.

6. The method according to claim 5, wherein
the first header comprises at least one of a first flag bit, a second flag bit, and a third flag bit, the first flag bit indicates that the UPU container carries the UPU list, the second flag bit indicates whether to request the terminal device to reply with acknowledgment information, and the third flag bit indicates whether to request the terminal device to perform re-registration.

7. The method according to claim 5 or 6, wherein
the obtaining the first header comprises: obtaining the first header in the first data field based on the first type field; and
the obtaining the to-be-updated parameter comprises: obtaining the to-be-updated parameter in the second data field based on the second type field.

8. A communication method, wherein the method comprises:
when a parameter of a terminal device needs to be updated, sending a first request message to an authentication network element, wherein the first request message comprises an identifier of the terminal device and a first user equipment parameters update UPU list; the first request message is used to request to perform security protection on the first UPU list; the first UPU list comprises a data set and a first header of a UPU container; the UPU container is used to carry the first UPU list; the first header is used to carry information provided by a network for the terminal device; the data set comprises a type field, a length field, and a data field; the type field indicates a type of the to-be-updated parameter; the length field indicates a length of the data set; and the data field is used to carry the to-be-updated parameter;
receiving a first response message from the authentication network element, wherein the first response message comprises a first message authentication code and a counter corresponding to the first message authentication code, and the first message authentication code is used to perform integrity protection on the first UPU list; and
sending the first UPU list, the first message authentication code, and the counter to the terminal device via a mobility management network element.

9. The method according to claim 8, wherein
the first header comprises at least one of a first flag bit, a second flag bit, and a third flag bit, the first flag bit indicates that the UPU container carries the UPU list, the second flag bit indicates whether to request the terminal device to reply with acknowledgment information, and the third flag bit indicates whether to request the terminal device to perform re-registration.

10. The method according to claim 8 or 9, wherein
the first header is located at a preset location in the first UPU list.

11. The method according to claim 10, wherein
the preset location is after the data set, and the data set is a last data set in the first UPU list.

12. The method according to claim 10, wherein
the preset location is before the data set, and the data set is an 1^{st} data set in the first UPU list.

13. The method according to claim 8 or 9, wherein
the first header is after the data set, the data set further comprises a fourth flag bit, and the fourth flag bit indicates that the first header is after the data set.

14. The method according to claim 13, wherein
the type field and the fourth flag bit are in a same byte, the type field occupies a 1^{st} bit to a 4^{th} bit in the byte, and the fourth flag bit occupies one of a 5^{th} bit to an 8^{th} bit in the byte.

15. The method according to any one of claims 8 to 14, wherein the method further comprises:
receiving first information from the terminal device, wherein the first information indicates that the terminal device fails to read the first header from the UPU container.

16. The method according to any one of claims 8 to 15, wherein
the sending the first UPU list, the first message authentication code, and the counter to the terminal device via the mobility management network element comprises:
sending a notification message to the mobility management network element, wherein the notification message comprises the first UPU list, the first message authentication code, and the counter; the notification message further comprises second information; the second information is used to determine a second header of the UPU container; the first UPU list, the first message authentication code, the counter, and the second information are carried as independent information elements in the notification message; and the second header is used to carry the information provided by the network for the terminal device.

17. A communication method, wherein the method comprises:
receiving a user equipment parameters update UPU container, wherein the UPU container comprises a first UPU list, a first message authentication code, and a counter corresponding to the first message authentication code; the first UPU list comprises a data set and a first header of the UPU container; the first header is used to carry information provided by a network for a terminal device; the data set comprises a type field, a length field, and a data field; the type field indicates a type of a to-be-updated parameter of the terminal device; the length field indicates a length of the data set; and the data field is used to carry the to-be-updated parameter;
determining a second message authentication code based on the first UPU list and the counter; and
when the first message authentication code matches the second message authentication code, obtaining the first header and the to-be-updated parameter, and performing a subsequent operation based on the first header.

18. The method according to claim 17, wherein
the first header comprises at least one of a first flag bit, a second flag bit, and a third flag bit, the first flag bit indicates that the UPU container carries the UPU list, the second flag bit indicates whether to request the terminal device to reply with acknowledgment information, and the third flag bit indicates whether to request the terminal device to perform re-registration.

19. The method according to claim 17 or 18, wherein
the first header is located at a preset location in the first UPU list.

20. The method according to claim 19, wherein
the preset location is after the data set, and the data set is a last data set in the first UPU list.

21. The method according to claim 19, wherein
the preset location is before the data set, and the data set is an 1^{st} data set in the first UPU list.

22. The method according to any one of claims 19 to 21, wherein the obtaining the first header comprises:
obtaining the first header based on the preset location.

23. The method according to claim 17 or 18, wherein
the first header is after the data set, the data set further comprises a fourth flag bit, and the fourth flag bit indicates that the first header is after the data set.

24. The method according to claim 3, wherein
the type field and the fourth flag bit are in a same byte, the type field occupies a 1^{st} bit to a 4^{th} bit in the byte, and the fourth flag bit occupies one of a 5^{th} bit to an 8^{th} bit in the byte.

25. The method according to claim 23 or 24, wherein the obtaining the first header comprises:
obtaining the first header after the data set based on the fourth flag bit.

26. A communication method, wherein the method comprises:
when a parameter of a terminal device needs to be updated, sending, by a data management network element, a first request message to an authentication network element, wherein the first request message comprises an identifier of the terminal device and a first user equipment parameters update UPU list; the first request message is used to request to perform security protection on the first UPU list; the first UPU list comprises a first data set and a second data set; the first data set comprises a first type field, a first length field, and a first data field; the first type field indicates that a type of the first data set is a data set that carries a first header of a UPU container; the UPU container is used to carry the first UPU list; the first header is used to carry information provided by a network for the terminal device; the first length field indicates a length of the first data set; the first data field is used to carry the first header; the second data set comprises a second type field, a second length field, and a second data field; the second type field indicates a type of the to-be-updated parameter; the second length field indicates a length of the second data set; and the second data field is used to carry the to-be-updated parameter;
obtaining, by the authentication network element, a counter based on the identifier of the terminal device, and determining a first message authentication code based on the first UPU list and the counter, wherein the first message authentication code is used to perform integrity protection on the first UPU list;
sending, by the authentication network element, a first response message to the data management network element, wherein the first response message comprises the first message authentication code and the counter; and
sending, by the data management network element, the first UPU list, the first message authentication code, and the counter to the terminal device via a mobility management network element.

27. The method according to claim 26, wherein
the first header comprises at least one of a first flag bit, a second flag bit, and a third flag bit, the first flag bit indicates that the UPU container carries the UPU list, the second flag bit indicates whether to request the terminal device to reply with acknowledgment information, and the third flag bit indicates whether to request the terminal device to perform re-registration.

28. The method according to claim 26 or 27, wherein
sending, by the data management network element, the first UPU list, the first message authentication code, and the counter to the terminal device via the mobility management network element comprises:
sending, by the data management network element, a notification message to the mobility management network element, wherein the notification message comprises the first UPU list, the first message authentication code, and the counter; the notification message further comprises second information; the second information is used to determine a second header of the UPU container; and the first UPU list, the first message authentication code, the counter, and the second information are carried as independent information elements in the notification message;
generating, by the mobility management network element, the UPU container based on the first UPU list, the first message authentication code, the counter, and the second information, wherein the UPU container comprises the second header, the first UPU list, the first message authentication code, and the counter, the second header is outside the first UPU list, and the second header is used to carry the information provided by the network for the terminal device; and
sending, by the mobility management network element, the UPU container to the terminal device.

29. A communication method, wherein the method comprises:
when a parameter of a terminal device needs to be updated, sending, by a data management network element, a first request message to an authentication network element, wherein the first request message comprises an identifier of the terminal device and a first user equipment parameters update UPU list; the first request message is used to request to perform security protection on the first UPU list; the first UPU list comprises a data set and a first header of a UPU container; the UPU container is used to carry the first UPU list; the first header is used to carry information provided by a network for the terminal device; the data set comprises a type field, a length field, and a data field; the type field indicates a type of the to-be-updated parameter; the length field indicates a length of the data set; and the data field is used to carry the to-be-updated parameter;
obtaining, by the authentication network element, a counter based on the identifier of the terminal device, and determining a first message authentication code based on the first UPU list and the counter, wherein the first message authentication code is used to perform integrity protection on the first UPU list;
sending, by the authentication network element, a first response message to the data management network element, wherein the first response message comprises the first message authentication code and the counter; and
sending, by the data management network element, the first UPU list, the first message authentication code, and the counter to the terminal device via a mobility management network element.

30. The method according to claim 29, wherein
the first header comprises at least one of a first flag bit, a second flag bit, and a third flag bit, the first flag bit indicates that the UPU container carries the UPU list, the second flag bit indicates whether to request the terminal device to reply with acknowledgment information, and the third flag bit indicates whether to request the terminal device to perform re-registration.

31. The method according to claim 29 or 30, wherein
sending, by the data management network element, the first UPU list, the first message authentication code, and the counter to the terminal device via the mobility management network element comprises:
sending, by the data management network element, a notification message to the mobility management network element, wherein the notification message comprises the first UPU list, the first message authentication code, and the counter; the notification message further comprises second information; the second information is used to determine a second header of the UPU container; and the first UPU list, the first message authentication code, the counter, and the second information are carried as independent information elements in the notification message;
generating, by the mobility management network element, the UPU container based on the first UPU list, the first message authentication code, the counter, and the second information, wherein the UPU container comprises the second header, the first UPU list, the first message authentication code, and the counter, the second header is outside the first UPU list, and the second header is used to carry the information provided by the network for the terminal device; and
sending, by the mobility management network element, the UPU container to the terminal device.

32. A communication apparatus, comprising a module or a unit configured to perform the method according to any one of claims 1 to 31.

33. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 31 by using a logic circuit or by executing code instructions.

34. The communication apparatus according to claim 33, wherein the communication apparatus is a chip or a chip system.

35. A computer-readable storage medium, wherein the storage medium stores a computer program or instructions; and when the computer program or the instructions are executed by a communication apparatus, the method according to any one of claims 1 to 31 is implemented.

36. A computer program product, comprising a computer program, wherein when the computer program runs, the method according to any one of claims 1 to 31 is implemented.

37. A communication system, comprising:
a data management network element configured to perform the method according to any one of claims 1 to 4, and a terminal device configured to perform the method according to any one of claims 5 to 7; or
a data management network element configured to perform the method according to any one of claims 8 to 16, and a terminal device configured to perform the method according to any one of claims 17 to 25.
